(19) 

Europäisches
Patentamt
European
Patent Office
Office européen
des brevets

(11) **EP 3 410 724 A1**

(12) **EUROPEAN PATENT APPLICATION**

(43) Date of publication:
**05.12.2018 Bulletin 2018/49**

(51) Int Cl.:
**H04N 19/70** *(2014.01)*  **H04N 19/593** *(2014.01)*
**H04N 19/11** *(2014.01)*  **H04N 19/14** *(2014.01)*
**H04N 19/176** *(2014.01)*

(21) Application number: **17305628.4**

(22) Date of filing: **31.05.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **RATH, Gagan**
 **35576 Cesson-Sévigné (FR)**

• **GALPIN, Franck**
 **35576 Cesson-Sévigné (FR)**
• **RACAPE, Fabien**
 **35576 Cesson-Sévigné (FR)**
• **LELEANNEC, Fabrice**
 **35576 Cesson-Sévigné (FR)**

(74) Representative: **Huchet, Anne et al**
**InterDigital CE Patent Holdings**
**1-5, Rue Jeanne d'Arc**
**92130 Issy-les-Moulineaux (FR)**

(54) **METHOD AND APPARATUS FOR SIGNALLING BI-DIRECTIONAL INTRA PREDICTION IN VIDEO ENCODING AND DECODING**

(57)     Different implementations are described for signaling whether or not to use bi-directional intra prediction. In a first embodiment, a syntax element is transmitted for each intra prediction block to explicitly signal whether bi-directional prediction is used. In a second embodiment, an implicit criterion may be calculated at both the encoder and decoder sides based on samples on the reference arrays. Based on the implicit criterion, the encoder and decoder can derive in the same manner whether bi-directional prediction is used, and thus, explicit signaling is not needed at the block level. In a third embodiment, whether to use bi-directional prediction (i.e., bi-directional flag) is determined based on coding performance, and a predictor for the bit-directional flag is determined based on the implicit criterion or causal neighbors, then the difference between the bi-directional flag and its predictor is transmitted to indicate whether bi-directional prediction is used.

FIG. 7

**Description**

TECHNICAL FIELD

The present embodiments generally relate to a method and an apparatus for video encoding and decoding, and more particularly, to a method and an apparatus for signaling bi-directional intra prediction.

BACKGROUND

To achieve high compression efficiency, image and video coding schemes usually employ prediction and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized and entropy coded. To reconstruct the video, the compressed data is decoded by inverse processes corresponding to the prediction, transform, quantization and entropy coding.

Intra prediction in video compression refers to the spatial prediction of a block of samples using information from causal neighbor blocks, that is, neighboring blocks in the same frame that have already been encoded or decoded. Intra prediction is a powerful coding tool since it allows for high compression efficiency in INTRA frames, as well as in INTER frames. Therefore, intra prediction has been included as a core coding tool in many video compression standards including, but not limited to, H.264/AVC and H.265/HEVC.

SUMMARY

According to a general aspect of the present principles, a method for video decoding is presented, comprising: decoding a directional intra prediction mode for a current block of a picture in a video; accessing one or more first samples on a first reference array and one or more second samples on a second reference array; determining whether to use one or two predictors for predicting a sample within said current block, based on said one or more first samples and said one or more second samples; predicting a sample value of said sample, by using a first predictor and a second predictor for said sample responsive to said determining, wherein said sample is substantially, on a line along a direction associated with said directional intra prediction mode, between said first and second predictors; and decoding said sample of said current block based on said predicted sample value.

According to another general aspect of the present principles, a method for video encoding is presented, comprising: accessing a directional intra prediction mode for a current block of a picture in a video; accessing one or more first samples on a first reference array and one or more second samples on a second reference array; determining whether to use one or two predictors for predicting a sample within said current block, based on said one or more first samples and said one or more second samples; predicting a sample value of said sample, by using a first predictor and a second predictor for said sample responsive to said determining, wherein said sample is substantially located, on a line along a direction associated with said directional intra prediction mode, between said first and second predictors; and encoding said current block based on said predicted sample value.

According to another general aspect of the present principles, an apparatus for video decoding is presented, comprising at least a memory and one or more processors, wherein the one or more processors are configured to: decode a directional intra prediction mode for a current block of a picture in a video; access one or more first samples on a first reference array and one or more second samples on a second reference array; determine whether to use one or two predictors for predicting a sample within said current block, based on said one or more first samples and said one or more second samples; predict a sample value of said sample, by using a first predictor and a second predictor for said sample responsive to said determining, wherein said sample is substantially located, on a line along a direction associated with said directional intra prediction mode, between said first and second predictors; and decode said sample of said current block based on said predicted sample value.

According to another general aspect of the present principles, an apparatus for video encoding, comprising at least a memory and one or more processors, wherein the one or more processors are configured to: access a directional intra prediction mode for a current block of a picture in a video; access one or more first samples on a first reference array and one or more second samples on a second reference array; determine whether to use one or two predictors for predicting a sample within said current block, based on said one or more first samples and said one or more second samples; predict a sample value of said sample, by using a first predictor and a second predictor for said sample responsive to said determining, wherein said sample is substantially located, on a line along a direction associated with said directional intra prediction mode, between said first and second predictors; and encode said current block based on said predicted sample value.

When said direction is a positive direction, said one or more first samples correspond to one or more reference samples on a first reference array, and said one or more second samples correspond to one or more corresponding samples on a second reference array, said one or more second samples corresponding to said one or more first samples along said direction, and wherein whether to use one or two predictors for predicting is determined based on respective differences between said one or more reference samples and said one or more corresponding samples.

In one embodiment, said one or more first samples correspond to a first reference sample and a second reference sample on a left reference array, said first reference sample being at the middle of said left reference array, and said second reference sample is at a far end of said left reference array from a top-left corner of said block.

When a weighted sum of said respective differences is below a value, both said first and second predictors are determined to be used for said intra prediction mode. Otherwise, when a weighted sum of said respective differences exceeds a value, only said first predictor is determined to be used for said intra prediction mode. Because the decision to use one or both predictors can be decided based on the same criterion in the same manner at the encoder and decoder sides, no explicit signaling is needed, that is, a block-level syntax element is not used to indicate whether to use one or two predictors for predicting a sample for said current block. In one embodiment, said value may be based on a bit depth of said video.

When said direction is a negative direction, said one or more first samples correspond to two reference samples on a first reference array, and said one or more second samples correspond to two reference samples on a second reference array, wherein whether to use one or two predictors for predicting is determined based on a first difference between said two reference samples on said first reference array and a second difference between said two reference samples on said second reference array.

When a sum of said first and second differences is below a value, both said first and second predictors are determined to be used for said intra prediction mode. Otherwise, when a sum of said first and second differences exceeds a value, only said first predictor is determined to be used for said intra prediction mode. Because the decision to use one or both predictors can be decided based on the same criterion in the same manner at the encoder and decoder sides, no explicit signaling is needed, that is, a block-level syntax element is not used to indicate whether to use one or two predictors for predicting a sample for said current block. In one embodiment, said value may be based on a bit depth of said video.

A flag can be included in the bitstream to indicate whether implicit signaling is used to indicate bi-directional intra prediction. When the flag is activated (flag = 1), the decoder may choose between bi-directional and uni-directional intra prediction based on the implicit criterion. Otherwise, if the flag is deactivated (flag = 0), the decoder uses uni-directional intra prediction only. The flag may be included in high-level syntax, such as, at a slice level, a picture level, or a sequence level.

According to another general aspect of the present principles, a video signal is formatted to include: encoded data indicative of a directional intra prediction mode for a current block of a picture in a video; and encoded data of a difference between a sample value of a sample within said current block and a corresponding predicted sample value, wherein said predicted sample value is determined based on a first predictor and a second predictor for said sample, wherein said sample is substantially located, on a line along a direction associated with said directional intra prediction mode, between said first and second predictors, and wherein a determination to use said first predictor and second predictor for determining said predicted sample value is based on one or more first samples on a first reference array and one or more second samples on a second reference array.

The present embodiments also provide a computer readable storage medium having stored thereon instructions for encoding or decoding video data according to the methods described above. The present embodiments also provide a computer readable storage medium having stored thereon a bitstream generated according to the methods described above. The present embodiments also provide a method and apparatus for transmitting the bitstream generated according to the methods described above.

BRIEF DESCRIPTION OF THE DRAWINGS

FIG. 1 illustrates a block diagram of an exemplary HEVC (High Efficiency Video Coding) video encoder.

FIG. 2 illustrates a block diagram of an exemplary HEVC video decoder.

FIG. 3 is a pictorial example depicting intra prediction directions in HEVC.

FIG. 4A and FIG. 4B are pictorial examples depicting bi-directional intra prediction with a positive direction and a negative direction, respectively, according to an embodiment of the present principles.

FIG. 5 illustrates an exemplary method of bi-directional intra prediction in video encoding.

FIG. 6 illustrates an exemplary method of bi-directional intra prediction in video decoding.

FIG. 7 illustrates an exemplary method of bi-directional intra prediction with implicit signaling in video encoding, according to an embodiment of the present principles.

FIG. 8A illustrates an exemplary method of bi-directional intra prediction with implicit signaling in video decoding, according to an embodiment of the present principles, and FIG. 8B illustrates an exemplary method of bi-directional intra prediction with predictive signaling in video decoding, according to an embodiment of the present principles.

FIG. 9 illustrates a block diagram of an exemplary system in which various aspects of the exemplary embodiments of the present principles may be implemented.

DETAILED DESCRIPTION

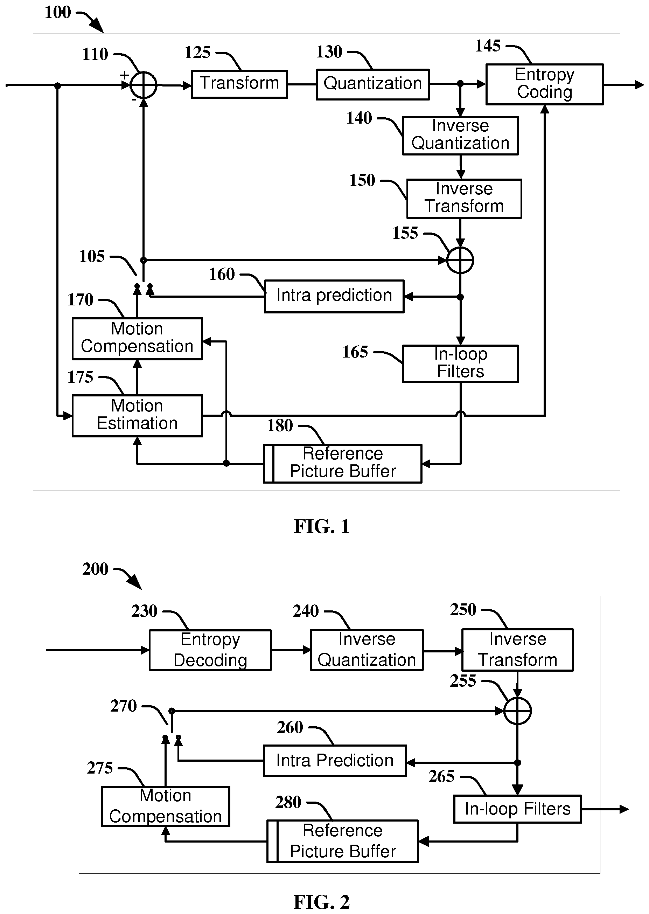

FIG. 1 illustrates an exemplary HEVC encoder 100. To encode a video sequence with one or more pictures, a picture is partitioned into one or more slices where each slice can include one or more slice segments. A slice segment is organized into coding units, prediction units and transform units.

In the present application, the terms "reconstructed" and "decoded" may be used interchangeably, and the terms "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU. In the present application, the term "block" can be used to refer to any of CTU, CU, PU, TU, CB, PB and TB. In addition, the "block" can also be used to refer to a macroblock and a partition as specified in H.264/AVC or other video coding standards, and more generally to refer to an array of data of various sizes.

In the exemplary encoder 100, a picture is encoded by the encoder elements as described below. The picture to be encoded is processed in units of CUs. Each CU is encoded using either an intra or inter mode. When a CU is encoded in an intra mode, it performs intra prediction (160). In an inter mode, motion estimation (175) and compensation (170) are performed. The encoder decides (105) which one of the intra mode or inter mode to use for encoding the CU, and indicates the intra/inter decision by a prediction mode flag. Prediction residuals are calculated by subtracting (110) the predicted block from the original image block.

In order to exploit the spatial redundancy, CUs in intra mode are predicted from reconstructed neighboring samples within the same slice. The causal neighboring CUs have already been encoded/decoded when the encoding/decoding of the current CU is considered. To avoid mismatch, the encoder and the decoder have the same prediction. Therefore, both the encoder and the decoder use the information from the reconstructed/decoded neighboring causal CUs to form prediction for the current CU.

The intra prediction process in HEVC includes three steps: (1) reference sample generation, (2) intra sample prediction, and (3) post-processing of predicted samples. For a CU of size NxN, a row of 2N decoded samples on the top is formed from the decoded CUs. Similarly, a column of 2N samples on the left is formed from the decoded CUs. The corner sample from the above-left decoded CU is used to fill up the gap between the above row and the left column references. If some of the samples are not available, for example, when the corresponding CUs is not in the same slice or the current CU is at a frame boundary, then reference sample substitution is performed where the missing samples are copied from the available samples in a clock-wise direction. Then, depending on the current CU size and the prediction mode, the reference samples are filtered using a specified filter.

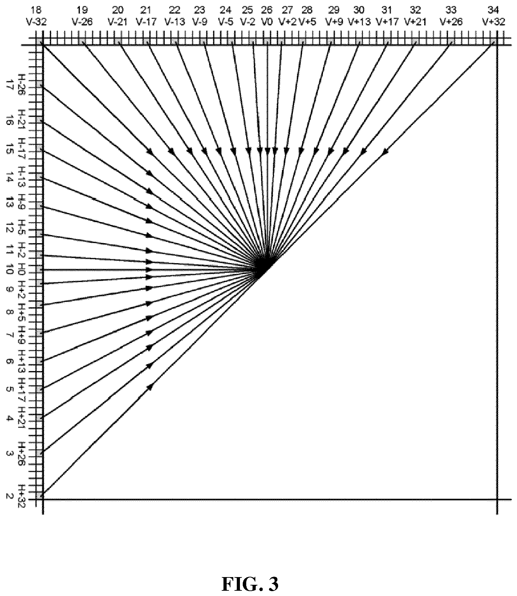

The next step, i.e., the intra sample prediction, consists of predicting the samples of the target CU based on the reference samples. In order to predict different kinds of content efficiently, HEVC supports a range of prediction methods. In particular, planar and DC prediction modes are used to predict smooth and gradually changing regions, whereas directional prediction modes (also referred to as "angular prediction modes") are used to capture different directional structures. HEVC supports 33 directional prediction modes which are indexed from 2 to 34. These prediction modes correspond to different prediction directions as illustrated in FIG. 3, wherein the numbers (i.e., 2, 3, ..., 34) denote intra prediction mode indices. The prediction modes 2-17 are denoted as horizontal prediction modes (H-26 to H+32), as the predominant sources of prediction is in horizontal direction. The modes 18-34 are denoted as vertical prediction modes (V-32 to V+32) accordingly. "H" and "V" in FIG. 2B are used to indicate the horizontal and vertical directionalities, respectively, while the numeric part of the identifier indicates the samples' displacement (also referred to as "angle parameter") at 1/32 sample fractions.

The directions with non-negative displacements (i.e., H0 to H+32 and V0 to V+32) are also denoted as positive directions, and the directions with negative displacements (i.e., H-2 to H-26 and V-2 to V-32) are also denoted as negative directions.

In HEVC reference code, a reference array is first constructed using the top and left reference samples. For vertical predictions, the reference array is horizontal (i.e., a reference row) and for horizontal predictions, the reference array is vertical (i.e., a reference column). For the modes with positive directions, the reference array is simply the top or left reference samples depending on the direction.

For the modes with negative directions, the reference array needs samples from both the top and left reference arrays. In this case, the reference array will extend to the negative indices beyond 0. Sample values on the reference array with positive indices are obtained as above depending on vertical or horizontal prediction. Those on the reference array with negative indices are obtained by projecting the left (for vertical predictions) or top reference samples (for horizontal predictions) on the reference array in the prediction direction.

Once the reference array is constructed, the prediction at any sample position ($x$, $y$) inside the target PU is obtained by projecting the sample position to the reference array along the selected direction and interpolating a value for the sample at 1/32 sample accuracy. The predicted sample value is computed by interpolating between two closest reference samples. When the projection points to an integer reference sample, the predicted sample value is equal to the reference array sample value in the direction of prediction.

Some of the prediction modes such as the DC mode and directly horizontal (i.e., mode 10) and directly vertical modes (i.e., mode 26) may cause discontinuity at the CU boundaries of the prediction samples. Therefore, such prediction modes are followed by a post-processing step where the boundary of the predicted samples are smoothed using a low-pass filter. Here, directly horizontal mode refers to the prediction mode when the reference samples on the left side of a target block are repeated horizontally to the right for intra prediction. Similarly, directly vertical mode refers to the prediction mode when the reference samples on the top of a target block are repeated vertically down for intra prediction.

Since there are multiple intra prediction modes available, the decoder needs the mode information to form the prediction for an intra-coded CU. The encoder encodes the mode information using a most probable mode (MPM) set for the luma component. HEVC specifies an MPM set consisting of three distinct modes, which is constructed from the prediction modes of the intra coded CUs on the top and left of the current CU, the planar mode, the DC mode, and the directly vertical mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed. The motion information (i.e., motion vector and reference picture index) can be signaled in two methods, namely, "merge mode" and "advanced motion vector prediction (AMVP)."

In the merge mode, a video encoder or decoder assembles a candidate list based on already coded blocks, and the video encoder signals an index for one of the candidates in the candidate list. At the decoder side, the motion vector (MV) and the reference picture index are reconstructed based on the signaled candidate.

In AMVP, a video encoder or decoder assembles candidate lists based on motion vectors determined from already coded blocks. The video encoder then signals an index in the candidate list to identify a motion vector predictor (MVP) and signals a motion vector difference (MVD). At the decoder side, the motion vector (MV) is reconstructed as MVP+MVD. The applicable reference picture index is also explicitly coded in the PU syntax for AMVP.

The prediction residuals are then transformed (125) and quantized (130). The quantized transform coefficients, as well as motion vectors and other syntax elements, are entropy coded (145) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture, for example, to perform deblocking/SAO (Sample Adaptive Offset) filtering to reduce encoding artifacts. The filtered image is stored at a reference picture buffer (180).

FIG. 2 illustrates a block diagram of an exemplary HEVC video decoder 200. In the exemplary decoder 200, a bitstream is decoded by the decoder elements as described below. Video decoder 200 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded (230) to obtain transform coefficients, motion vectors, and other coded information. The transform coefficients are de-quantized (240) and inverse transformed (250) to decode the prediction residuals. Combining (255) the decoded prediction residuals and the predicted block, an image block is reconstructed. The predicted block may be obtained (270) from intra prediction (260) or motion-compensated prediction (i.e., inter prediction) (275). As described above, AMVP and merge mode techniques may be used to derive motion vectors for motion compensation, which may use interpolation filters to calculate interpolated values for sub-integer samples of a reference block. In-loop filters (265) are applied to the reconstructed image. The filtered image is stored at a reference picture buffer (280).

As described above, in HEVC, encoding of a frame of video sequence is based on a block structure. A frame is divided into square coding tree units (CTUs), which may undergo quadtree (QT) splitting to multiple coding units based on rate-distortion criteria. Each CU is either intra-predicted, that is spatially predicted from the causal neighbor CUs, or inter-predicted, that is, temporally predicted from reference frames already decoded. In I-slices all CUs are intra-predicted, whereas in P and B slices the CUs can be either intra or inter-predicted. For intra prediction, HEVC defines 35 prediction modes which include one planar mode (indexed as mode 0), one DC mode (indexed as mode 1) and 33 directional prediction modes (indexed as modes 2 - 34).

In JEM (Joint Exploration Model) under study by the Joint Video Exploration Team (JVET) for designing the next generation video compression standard, the QTBT (Quadtree plus Binary Tree) structure removes the concept of multiple partition types in HEVC, i.e., removes the separation of CU, PU and TU concepts. A Coding Tree Unit (CTU) is firstly partitioned by a quadtree structure. The quadtree leaf nodes are further partitioned by a binary tree structure. The binary tree leaf node is named as Coding Units (CUs), which is used for prediction and transform without further partitioning. Thus, the CU, PU and TU have the same block size in the new coding QTBT block structure. In JEM, a CU consists of Coding Blocks (CBs) of different color components.

As possible improvements to HEVC, JEM 3.0 uses 65 directional intra prediction modes in addition to the planar and DC modes. The modes are numbered from 2 to 66 in the increasing order, in the same fashion as done in HEVC from 2 to 34. The 65 directional prediction modes include the 33 directional prediction modes specified in HEVC plus 32 additional directional prediction modes that correspond to angles in-between two original angles. In other words, the prediction direction in JEM has twice the angle resolution of HEVC. The higher number of prediction modes has been proposed to exploit the possibility of angular structures with proposed larger block sizes. Corresponding to the higher number of modes, there is a higher number of angle parameter A values.

In addition to square CUs, JEM can also have rectangular CUs because of the QTBT structure. For positive directions, for a CU of size $W \times H$, a row of $W + H$ decoded samples on the top is formed from the decoded CUs for vertical directions, and for a column of $W + H$ decoded samples to the left is formed from the decoded CUs for horizontal directions, where $W$ and $H$ denote the width and the height of the target CU, respectively. For negative directions, the reference array is constructed as above for positive indices. For negative indices, the projections of the left reference array (for vertical predictions) or top reference array (for horizontal predictions) are used. The prediction process basically remains the same as in HEVC.

Two commonly-owned European patent applications, entitled "Method and Apparatus for Bi-Directional Intra Prediction for Negative Directions in Video Encoding and Decoding" (Attorney Docket No. PF170080, filed May 31, 2107) and "Method and Apparatus for Intra Prediction with Interpolation" (Attorney Docket No. PF170090, filed May 31, 2107), the teachings of which are specifically incorporated herein by reference, disclose bi-directional intra prediction methods for predicting the target samples. These bi-directional intra prediction methods apply only to angular intra prediction modes. Instead of simply repeating a predictor along the prediction direction as in HEVC, the bi-directional intra prediction methods further compute another predictor on the other side of the prediction direction and interpolate a value at the target sample using the two predictors.

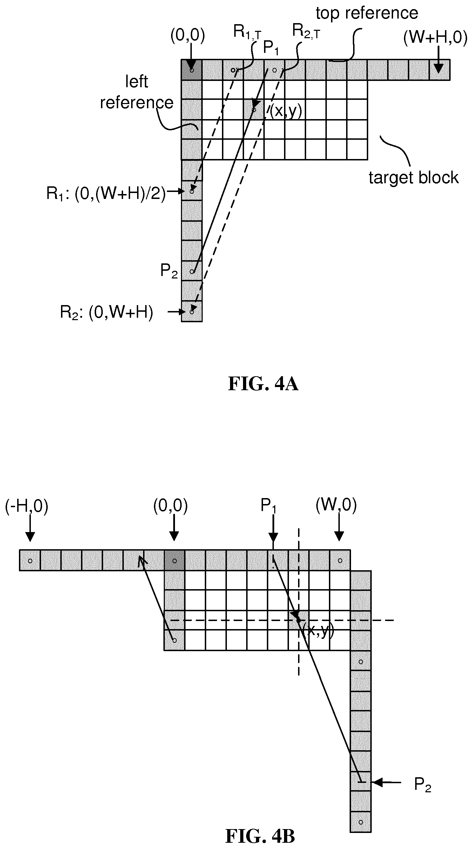

FIG. 4A illustrates an exemplary implementation of bi-directional intra prediction (positive direction) with two predictors for an exemplary target sample at (x,y) by using predictor $P_1$ from the top reference array and predictor $P_2$ from the left reference array. Projecting the current location (x,y) along the direction associated with an intra prediction to the top reference array, predictor $P_1$ is obtained as the reference sample along the projection line if the projection line intersects the top reference array at an integer sample position, or by interpolating two closest reference samples. Similarly, predictor $P_2$ is obtained using reference samples on the left reference array. The target sample at location (x,y) can then be interpolated based on predictors $P_1$ and $P_2$. In the present application, the line, passing through the target sample, along the prediction direction is also denoted as a prediction line.

FIG. 4B illustrates an exemplary implementation of bi-directional intra prediction (negative direction) with two predictors for an exemplary target sample at (x,y) by using predictor $P_1$ from the top reference array and predictor $P_2$ from an estimated right reference array. Predictor $P_1$ is obtained from the top reference array, and predictor $P_2$ is obtained using reference samples on the estimated right reference array. In a different implementation, predictor $P_2$ can be obtained using reference samples on an estimated bottom reference array. As can be seen from FIGs. 4A and 4B, bi-directional intra prediction uses two predictors from opposite directions of the target sample, along the prediction line, intra prediction. For ease of notation, those methods using a predictor from one direction (e.g., in AVC or HEVC) are denoted as "uni-directional intra prediction."

Due to the precision of calculation, the calculated locations for the predictors may be slighted off the prediction line. However, those skilled in the art would understand that the predictors would be substantially on the prediction line. Thus, without loss of generality, we consider that the predictors are on the prediction line in the following discussion.

Whether to use only one predictor $P_1$ (uni-directional intra prediction) such as the one used in HEVC, or to use two predictors (bi-directional intra prediction), for a current block, can be decided on the basis of RD (Rate-Distortion) performance. To indicate which method is used, a 1-bit signaling flag can be transmitted to indicate the prediction method employed by the encoder. The transmitted bit can be context encoded using the CABAC algorithm.

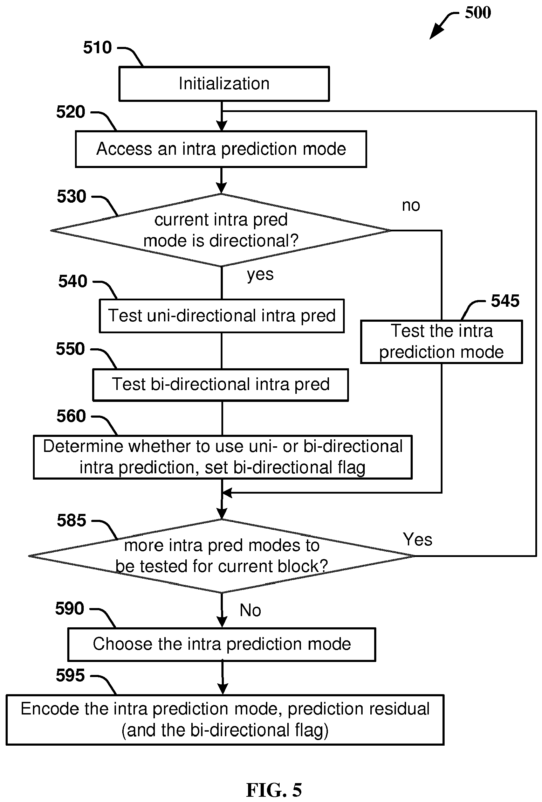

FIG. 5 illustrates an exemplary method 500 for encoding with bi-directional intra prediction. Method 500 may accept a video sequence to be encoded as input. At initialization step 510, the encoder may decide whether bi-directional intra prediction may be used for encoding the video sequence. For example, the encoder may signal in the high-level syntax, such as slice header, PPS, or SPS as non-limiting examples, that all CUs in a slice, picture, sequence, respectively, can use the bi-directional intra prediction option.

At step 520, the encoder accesses the current intra prediction mode to be tested. The encoder checks (530) whether the current intra prediction mode is a directional mode, i.e., not DC or planar. If bi-directional intra prediction is not to be used, the encoder tests (545) the intra prediction mode for the block using uni-directional prediction, for example, as in HEVC. Otherwise, if bi-directional intra prediction may be used, the encoder tests (540) the intra prediction mode with uni-directional intra prediction, for example, performing intra prediction as in HEVC, and the encoder also tests (550) the intra prediction mode with bi-directional intra prediction, for example, as illustrated in FIG. 4A and FIG. 4B. The test may be done by computing the RD cost. Based on the coding performance, the encoder determines (560) whether to use bi-directional prediction for the current intra prediction mode, and a bi-directional flag is set to 0 or 1 based on the choice of uni- and bi-directional prediction.

The encoder checks (585) whether more intra prediction modes are to be tested for the current block. If yes, the control returns to step 520. Otherwise, the encoder chooses (590) the best intra prediction mode to be used based on the testing results (e.g., choosing the one with the smallest RD cost among different intra prediction modes). At step 595, the intra prediction mode and prediction residual are encoded. If the intra prediction mode is a directional mode, the bi-directional flag is also encoded (595), for example, context encoded with context 0, or a mode-dependent context. The encoding process can also be repeated for other blocks that use intra coding.

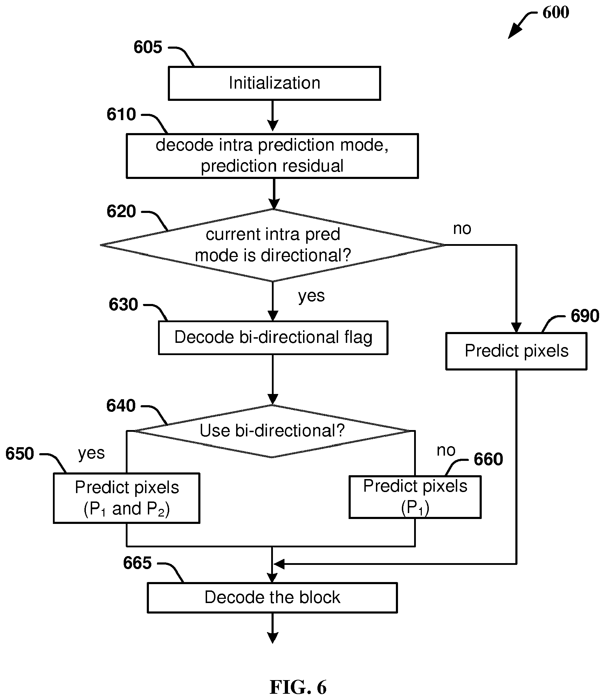

FIG. 6 illustrates an exemplary method 600 for decoding with bi-directional intra prediction. Method 600 may accept a bitstream to be decoded as input, for example, use the output of method 500 as input. At initialization step 605, the encoder may decide whether bi-directional intra prediction may be used for decoding the video sequence.

At step 610, the decoder decodes the intra prediction mode and prediction residuals for the current block. The decoder checks (620) whether the intra prediction mode is directional, i.e., not DC or planar. If the mode is not a directional one, the decoder decodes (690) the block use uni-directional prediction. Otherwise, for a directional mode, the decoder decodes (630) a bi-directional flag indicating (640) whether uni-directional or bi-directional intra prediction is used for the current block. The decoder decodes the bi-directional flag only if the prediction mode is directional. If the prediction mode is planar or DC, the decoder does not decode the signaling flag and a default value of zero is assumed for the bi-directional flag.

If uni-directional prediction is used, the decoder preforms (660) uni-directional intra prediction, for example, performing intra prediction as in HEVC. If bi-directional prediction is used, the decoder performs (650) bi-directional intra prediction. Using the prediction and prediction residuals, the current block can be decoded (665). The decoding process can be repeated for other blocks that use intra coding.

In method 500, the bi-directional flag encoding depends on the prediction mode, and the parsing of the bi-directional flag becomes dependent on the parsing of the prediction mode at the decoder. That is, the decoder can parse the bi-directional flag only after parsing the prediction mode. Since CABAC decoding is a serial process, this creates dependency in the CABAC decoding chain, adding speed and parallelization issues.

The present principles are directed to signaling whether bi-directional intra prediction is used. Different embodiments are provided to address the dependency issue in parsing the bi-directional flag.

Explicit Signaling for all CUs

In one embodiment, we propose to avoid the parsability issue by transmitting a signaling flag for each INTRA CU irrespective of its prediction mode. That is, we can use a 1-bit signaling flag for each of the prediction modes including planar and DC, to indicate whether uni- or bi-directional prediction is used. Referring back to FIG. 5 for encoding methods, when a non-directional mode is used, the encoder sets (545) the bi-directional flag to 0, which is to be encoded irrespective of the intra prediction mode at step 595. Referring back to FIG. 6 for decoding methods, the decoder can decode the signaling flag independent of the decoded prediction mode value at step 630. Specifically, steps 620 and 690 can be skipped. For a non-directional intra prediction mode, the bi-directional flag is still decoded (630) and should be always decoded as 0.

For the chroma components, in one embodiment, we can transmit one bit signaling for each chroma CU to indicate whether uni- or bi-directional prediction is used, independent of the luma CU signaling. The one-bit flag can be context-encoded using either context 0, a mode-dependent or neighborhood-dependent context. In another embodiment, we may use no additional signaling for the chroma components' prediction. Rather, the chroma components can use the same signaling as the luma CU at the center or top-left corner of the CTU. In this embodiment, if the luma signaling flag is enabled and the direct mode (in HEVC) or DM_CHROMA (in JEM) is angular, then the CU is predicted with bi-directional intra prediction. Otherwise the uni-directional intra prediction is performed.

Implicit Signaling

In another embodiment, we address the parsability problem by not sending any signaling bit altogether, when indicating whether uni- or bi-directional prediction is used. In this case, the encoder will decide whether or not to use bi-directional methods based on an implicit criterion instead of the RD performance. This is decided while forming the prediction for the target block. Accordingly, the decoder does not have to parse any explicit signaling flag and can decide the bi-directional mode by computing the same implicit criterion in the same manner as the encoder.

Referring back to FIG. 4A, for positive vertical prediction, the reference array consists of the decoded samples on the top or the top right of the target CU. For any target sample, we can compute the first predictor, that is the predictor on the reference array in the direction of prediction, using the existing approach. We can also compute the second predictor for the target sample on the left reference array. For example, for the last prediction mode (i.e., prediction mode 34 in HEVC or prediction mode 66 in JEM), the first predictor at $(0, y)$ on the left reference array has the corresponding second predictor on the top reference array at $(y, 0)$, where $0 < y \leq W + H$. For any other positive vertical prediction, the second predictor, corresponding to the first predictor at $(0,y)$, will lie between $(0,0)$ and $(y, 0)$. Since the top and left reference arrays have the same length, all the predictors on the left reference array will have their corresponding second predictors on the top reference array for any positive vertical direction. For positive horizontal predictions, the case is the same if we swap the top reference and the left reference arrays, along with the height and the width of the CU. Therefore, in the following, we describe implicit signaling with respect to only positive vertical prediction without losing generality.

In one embodiment, we use an implicit measure to decide whether to perform bi-directional prediction or not. The implicit measure can be calculated at both the encoder and decoder, so the decision on whether to use bi-directional prediction does not need to be signaled explicitly. This is also why we refer to such a measure as an "implicit criterion" or "implicit measure."

The implicit measure is often a measure of intensity change, for example, the gradient along the direction of prediction (both for positive and negative directions). For positive directions, we can calculate a measure of the gradient using the given measure. Specifically, we may choose reference samples on one reference array, and obtain the reference samples on the other reference array along the prediction line. Comparing these two sets of reference samples would indicate whether bi-directional prediction may be beneficial.

In particular, a large difference may indicate a change in directionality, or some edges, for which bi-directional prediction usually does not work well. A zero-difference indicates that the sample along the prediction line may be all identical, and there is no need to perform bi-directional interpolation because the uni-directional prediction may just work as well.

To calculate the differences, we could use one or more reference samples on the left reference array. However, considering computation complexity, we may choose two samples at $\left(0, \frac{W+H}{2}\right)$ and $(0, W + H)$, respectively. These two samples are spaced well apart, and thus are representative of the full range of the reference samples.

Referring to FIG. 4A, let $R_1$ and $R_2$ denote the two reference sample values on the left reference array at

$\left(0, \dfrac{W+H}{2}\right)$ and $(0, W + H)$, respectively. Let $R_{1,T}$ and $R_{2,T}$ denote the corresponding samples along the prediction line on the top reference array. For the target block at the particular intra prediction mode, we may choose bi-directional prediction over uni-directional one if the following condition is satisfied:

$$\left| R_{1,T} - R_1 \right| + \frac{\left| R_{2,T} - R_2 \right|}{2} \leq Th \qquad (1)$$

where $Th$ denotes a preset threshold value. We divide the second term by 2 since the distance between the second pair is twice of that between the first pair. The value of the threshold can be set, for example, as

$$Th = (1 \ll (b - 5))$$

where b denotes the bit depth of the samples.

For the negative directions, we do not have a set of reference samples which we can predict based on some other reference samples. This is because all prediction directions are towards right or towards bottom. We can estimate the right or bottom reference array, as we did for bi-directional prediction. Then the implicit measure for negative directions can be calculated similar to that of positive directions.

In another embodiment, for negative directions, we can compute an implicit criterion by using the last samples of the top and left reference arrays, and we may choose bi-directional prediction over uni-directional one if the following condition is satisfied:

$$|leftRef[H] - leftRef[0]| + |topRef[W] - topRef[0]| \leq Th, \qquad (2)$$

where $leftRef$ and $topRef$ denote the left and the top reference arrays, respectively. The value of the threshold $Th$ can be set as described above for positive directions.

It should be noted that in Eq. (2), $leftRef$[0] and $topRef$[0] refer to the same sample value (the top-left corner sample). Note that other samples, such as $leftRef$[1] and $topRef$[1], as non-limiting examples, can be used in place of $leftRef$[0] and $topRef$[0].

Other implicit measures or criteria can be used to decide whether to use bi-directional prediction. For example, we can have a squared sum rather than an absolute sum in Eq. (1) or (2). Usually, the measures should be kept simple since these criteria will be applied for all blocks and also by the decoder.

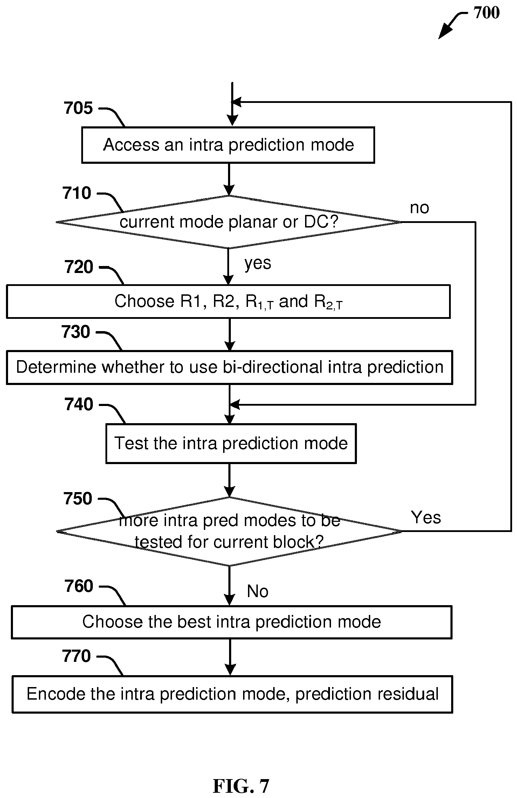

FIG. 7 illustrates an exemplary method 700 for implicit signaling in bi-directional intra prediction for video encoding, according to an embodiment of the present principles. Method 700 may accept a video sequence to be encoded as input. At step 705, the encoder accesses the current intra prediction mode to be tested. Then the encoder checks (710) whether the current intra prediction mode is a directional mode, i.e., not DC or planar. If the intra prediction mode is not a directional one, the encoder tests (740) the intra prediction mode for the block using uni-directional intra prediction, for example, as in HEVC. Otherwise, if the intra prediction mode is a directional one with a positive direction, the encoder chooses (720) two reference samples from one reference array (left or top based on the directionality of the prediction mode). The encoder also computes two corresponding samples in the other reference array along the prediction direction. Based on these four samples, the encoder may decide (730) whether uni- or bi-directional prediction is to be used, for example, based on Eq. (1). For a directional mode with a negative direction, multiple samples from the top and left reference arrays may be chosen and be used to calculate an implicit criterion to decide (730) whether to use uni- or bi-directional prediction, for example, based on Eq. (2).

The encoder then tests (740) the intra prediction mode with uni- or bi-directional intra prediction as determined in step 730. The test may be done by computing the RD cost. The encoder checks (750) whether more intra prediction modes are to be tested for the current block. If yes, the control returns to step 705. Otherwise, the encoder chooses (760) the best intra prediction mode to be used based on the testing results (e.g., choosing the one with the smallest RD cost among different intra prediction modes). At step 770, the intra prediction mode and prediction residual are encoded. Note the encoder does not need to encode any dedicated flag to indicate whether uni- or bi-directional prediction is used for the current block since the decoder can determine the information based on the calculation of the same criterion. The encoding process can be repeated for other blocks that use intra coding.

For the chroma components, we can transmit a signaling flag. If the prediction mode of the chroma components is DC or planar, then the bi-directional flag is set to 0. Otherwise, the flag is set to 1 or 0 depending on whether uni- or bi-directional prediction is used. The signaling flag can be context encoded using context 0, or a mode-dependent or neighborhood-dependent context.

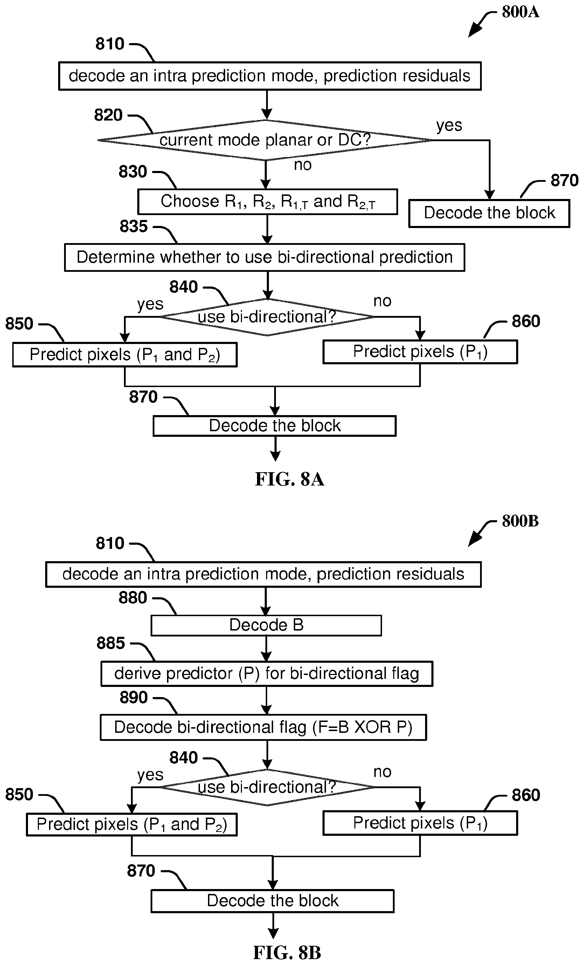

FIG. 8A illustrates an exemplary method 800A for bi-directional intra prediction with implicit signaling in video decoding, according to an embodiment of the present principles. Method 800A may accept a bitstream to be decoded as input, for example, use the output of method 700 as input.

At step 810, the decoder decodes the intra prediction mode and prediction residuals for the current block. The decoder checks (820) whether the intra prediction mode is directional, i.e., not DC or planar. If the mode is not a directional one, the decoder decodes (870) the block use uni-directional prediction. Otherwise, for a directional mode, the decoder chooses (830) reference samples from the top or left reference arrays, and the decoder can then calculate an implicit criterion to determine whether or not to use bi-directional prediction. Steps 830 and 835 may be implemented in the same manner as steps 720 and 730 in method 700, respectively.

If uni-directional prediction is used, the decoder preforms (860) uni-directional intra prediction, for example, performing intra prediction as in HEVC. If bi-directional prediction is used, the decoder performs (850) bi-directional intra prediction. Using the prediction and prediction residuals, the current block can be decoded (870). The decoding process can be repeated for other blocks that use intra coding. The method of implicit signaling can be applied to both the luma and chroma components.

Predictive Signaling

In the above, we describe explicit signaling and implicit signaling for indicating bi-directional flag. For explicit signaling, whether or not to use bi-directional intra prediction can be determined based on the RD cost and may have good R-D performance if the signaling flags were not to be encoded. However, since we use a signaling flag for each CU, the amount of overhead caused by signaling the bi-directional flag may be big. To mitigate the overhead from the flag, in one embodiment, we may predict the bi-directional flag during encoding.

On encoder side, in one implementation, the decision of whether to use bi-directional prediction may be decided, for example, using an RD criterion as shown in method 500. The decision result is noted F (1 or 0). Then a prediction P (1 or 0) of the bi-directional decision can be made by any of the following methods.

For DC and planar modes, prediction P = 0. Optionally, for some angular modes (like directly vertical or horizontal) the bi-directional prediction can be disabled and prediction P = 0. For remaining angular modes, prediction P may be determined as described in method 700 or 800A. Alternatively, the spatial values of the bi-directional flags of surrounding causal blocks can be used to perform a prediction, for example P = (L or A), where L or A is the value of the bi-directional flag of the left or above neighbor CU, respectively. Prediction P and flag F are then used to encode bit B in the bit stream, for example, as B = F (XOR) P, where (XOR) denotes the Boolean Exclusive-OR operation. The resulting bit B can be context encoded using context 0, a mode-dependent or neighborhood-dependent context.

Using such predictive signaling, the parsing of the flag has no parsability issue, namely, a flag is always present independently of the mode. In addition, the encoding may be more efficient because of the prediction of the flag.

FIG. 8B illustrates an exemplary method 800B for bi-directional intra prediction with predictive signaling in video decoding, according to an embodiment of the present principles. In the following, we describe steps in method 800B that are different from method 800A.

At step 880, the decoder decodes bit B for the current block. The predictor (P) is derived at step 885, for example, using the method described in method 800A for a directional intra prediction mode. Predictor P may also be set to 0 for some modes, such as planar or DC, or directly horizontal and vertical modes. Alternatively, predictor P may be predicted from spatial neighbor blocks. Based on bit B and predictor P, the bi-directional flag F can be determined (890) as B (XOR) F, to indicate whether or not to use bi-directional prediction.

Using the JEM 3.0 codec as the baseline, we performed tests for the proposed modification in ALL-INTRA (AI) configuration. For bi-directional intra prediction, we chose explicit signaling. We included a flag in the SPS header to indicate that bi-directional prediction may be used for encoding or decoding. The bi-directional flag for the luma CUs were context-encoded with context 0. The signaling for the chroma components was derived from the signaling flag of the center luma CU.

As shown in TABLE 1, overall for the different classes of input samples, the rate reductions for Y, U, V samples are respectively 0.36%, 0.46% and 0.49% BD (Bjøntegaard-Delta) rate reductions, with twice computational complexity at the encoder side and almost no increase in the decoding complexity (i.e., 204% and 101% respectively). Thus, the present exemplary embodiment may improve the compression efficiency while maintaining the computational complexity cost at the decoder side.

TABLE 1

| | Over HM-16.6-JEM-3 (parallel) | | | | |
|---|---|---|---|---|---|
| | Y | U | V | EncT | DecT |
| Class A1 | -0.51% | -0.42% | -1.10% | 204% | 101% |
| Class A2 | -0.69% | -0.97% | -0.58% | 204% | 103% |
| Class B | -0.16% | -0.05% | -0.31% | 206% | 101% |
| Class C | -0.30% | -0.04% | 0.50% | 202% | 99% |
| Class D | -0.20% | -1.46% | -1.79% | 207% | 97% |
| Class E | -0.33% | 0.25% | 0.54% | 203% | 102% |
| **Overall** | -0.36% | -0.46% | -0.49% | 204% | 101% |
| Class F (optional) | -0.13% | 0.00% | 0.36% | 197% | 101% |

Various methods are described above, and each of the methods comprises one or more steps or actions for achieving the described method. Unless a specific order of steps or actions is required for proper operation of the method, the order and/or use of specific steps and/or actions may be modified or combined.

Various numeric values are used in the present application, for example, the threshold value used in implicit signaling, or the length of reference array (W+H, or W+H+1). It should be noted that the specific values are for exemplary purposes and the present principles are not limited to these specific values.

In the above, various embodiments are described with respect to HEVC, or JVET based on the HEVC standard. For example, various methods of bi-directional intra prediction as described above can be used to modify the intra prediction module (160, 260) of the JVET or HEVC encoder and decoder as shown in FIG. 1 and FIG. 2. However, the present principles are not limited to JVET or HEVC, and can be applied to other standards, recommendations, and extensions thereof.

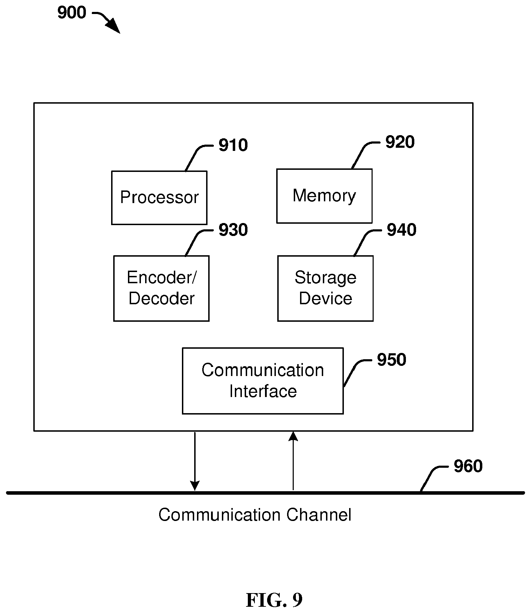

FIG. 9 illustrates a block diagram of an exemplary system in which various aspects of the exemplary embodiments of the present principles may be implemented. System 900 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 900 may be communicatively coupled to other similar systems, and to a display via a communication channel as shown in FIG. 9 and as known by those skilled in the art to implement the exemplary video system described above.

The system 900 may include at least one processor 910 configured to execute instructions loaded therein for implementing the various processes as discussed above. Processor 910 may include embedded memory, input output interface and various other circuitries as known in the art. The system 900 may also include at least one memory 920 (e.g., a volatile memory device, a non-volatile memory device). System 900 may additionally include a storage device 920, which may include non-volatile memory, including, but not limited to, EEPROM, ROM, PROM, RAM, DRAM, SRAM, flash, magnetic disk drive, and/or optical disk drive. The storage device 940 may comprise an internal storage device, an attached storage device and/or a network accessible storage device, as non-limiting examples. System 900 may also include an encoder/decoder module 930 configured to process data to provide an encoded video or decoded video.

Encoder/decoder module 930 represents the module(s) that may be included in a device to perform the encoding and/or decoding functions. As is known, a device may include one or both of the encoding and decoding modules. Additionally, encoder/decoder module 930 may be implemented as a separate element of system 900 or may be incorporated within processors 910 as a combination of hardware and software as known to those skilled in the art.

Program code to be loaded onto processors 910 to perform the various processes described hereinabove may be stored in storage device 940 and subsequently loaded onto memory 920 for execution by processors 910. In accordance with the exemplary embodiments of the present principles, one or more of the processor(s) 910, memory 920, storage device 940 and encoder/decoder module 930 may store one or more of the various items during the performance of the processes discussed herein above, including, but not limited to the input video, the decoded video, the bitstream, equations, formula, matrices, variables, operations, and operational logic.

The system 900 may also include communication interface 950 that enables communication with other devices via communication channel 960. The communication interface 950 may include, but is not limited to a transceiver configured to transmit and receive data from communication channel 960. The communication interface may include, but is not limited to, a modem or network card and the communication channel may be implemented within a wired and/or wireless medium. The various components of system 900 may be connected or communicatively coupled together using various suitable connections, including, but not limited to internal buses, wires, and printed circuit boards.

The exemplary embodiments according to the present principles may be carried out by computer software implemented by the processor 910 or by hardware, or by a combination of hardware and software. As a non-limiting example, the exemplary embodiments according to the present principles may be implemented by one or more integrated circuits. The memory 920 may be of any type appropriate to the technical environment and may be implemented using any appropriate data storage technology, such as optical memory devices, magnetic memory devices, semiconductor-based memory devices, fixed memory and removable memory, as non-limiting examples. The processor 910 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method of video decoding, comprising:

   decoding (810) a directional intra prediction mode for a current block of a picture in a video;
   accessing (830) one or more first samples on a first reference array and one or more second samples on a second reference array;
   determining (835) whether to use one or two predictors for predicting a sample within said current block, based on said one or more first samples and said one or more second samples;

predicting (850) a sample value of said sample, by using a first predictor and a second predictor for said sample responsive to said determining, wherein said sample is substantially located, on a line along a direction associated with said directional intra prediction mode, between said first and second predictors; and

decoding (870) said sample of said current block based on said predicted sample value.

2. A method of video encoding, comprising:

accessing (505) a directional intra prediction mode for a current block of a picture in a video;

accessing (520) one or more first samples on a first reference array and one or more second samples on a second reference array;

determining (530) whether to use one or two predictors for predicting a sample within said current block, based on said one or more first samples and said one or more second samples;

predicting (540) a sample value of said sample, by using a first predictor and a second predictor for said sample responsive to said determining, wherein said sample is substantially located, on a line along a direction associated with said directional intra prediction mode, between said first and second predictors; and

encoding (570) said current block based on said predicted sample value.

3. An apparatus (900) of video decoding, comprising at least a memory and one or more processors, wherein the one or more processors are configured to:

decode a directional intra prediction mode for a current block of a picture in a video;

access one or more first samples on a first reference array and one or more second samples on a second reference array;

determine whether to use one or two predictors for predicting a sample within said current block, based on said one or more first samples and said one or more second samples;

predict a sample value of said sample, by using a first predictor and a second predictor for said sample responsive to said determining, wherein said sample is substantially located, on a line along a direction associated with said directional intra prediction mode, between said first and second predictors; and

decode said sample of said current block based on said predicted sample value.

4. An apparatus (900) of video encoding, comprising at least a memory and one or more processors, wherein the one or more processors are configured to:

access a directional intra prediction mode for a current block of a picture in a video;

access one or more first samples on a first reference array and one or more second samples on a second reference array;

determine whether to use one or two predictors for predicting a sample within said current block, based on said one or more first samples and said one or more second samples;

predict a sample value of said sample, by using a first predictor and a second predictor for said sample responsive to said determining, wherein said sample is substantially located, on a line along a direction associated with said directional intra prediction mode, between said first and second predictors; and

encode said current block based on said predicted sample value.

5. The method of claim 1 or 2, or the apparatus of claim 3 or 4, wherein said direction is a positive direction, wherein said one or more first samples correspond to one or more reference samples on a first reference array, wherein said one or more second samples correspond to one or more corresponding samples on a second reference array, said one or more second samples corresponding to said one or more first samples along said direction, and wherein whether to use one or two predictors for predicting is determined based on respective differences between said one or more reference samples and said one or more corresponding samples.

6. The method of any one of claims 1, 2 and 5, or the apparatus of any one of claims 3-5, wherein said one or more first samples correspond to a first reference sample and a second reference sample on a left reference array, said first reference sample being at the middle of said left reference array, and said second reference sample being at a far end of said left reference array from a top-left corner of said block.

7. The method of any one of claims 5 and 6, or the apparatus of any one of claims 5 and 6, wherein both said first and second predictors are determined to be used for said intra prediction mode when a weighted sum of said respective differences is below a value.

8.  The method of any one of claims 5 and 6, or the apparatus of any one of claims 5 and 6, wherein only said first predictor is determined to be used for said intra prediction mode when a weighted sum of said respective differences exceeds a value.

9.  The method of claim 7 or 8, wherein said value is based on a bit depth of said video.

10. The method of any one of claims 1 and 2, or the apparatus of any one of claims 3 and 4, wherein said direction is a negative direction, wherein said one or more first samples correspond to two reference samples on a first reference array, wherein said one or more second samples correspond to two reference samples on a second reference array, and wherein whether to use one or two predictors for predicting is determined based on a first difference between said two reference samples on said first reference array and a second difference between said two reference samples on said second reference array.

11. The method of any one of claim 10, or the apparatus of any one of claim 12, wherein both said first and second predictors are determined to be used for said intra prediction mode when a weighted sum of a first difference and a second difference is below a value.

12. The method of any one of claims 1, 2 and 5-11, or the apparatus of any one of claims 3-11, wherein a block-level syntax element is not used to indicate whether to use one or two predictors for predicting said sample for said current block.

13. The method of any one of claims 1, 2 and 5-12, or the apparatus of any one of claims 3-12, wherein a high-level syntax is used to indicate that bi-directional intra prediction is used for decoding said video.

14. A video signal, formatted to include:

    encoded data indicative of a directional intra prediction mode for a current block of a picture in a video; and encoded data of a difference between a sample value of a sample within said current block and a corresponding predicted sample value, wherein said predicted sample value is determined based on a first predictor and a second predictor for said sample, wherein said sample is substantially located, on a line along a direction associated with said directional intra prediction mode, between said first and second predictors, and wherein a determination to use said first predictor and second predictor for determining said predicted sample value is based on one or more first samples on a first reference array and one or more second samples on a second reference array.

15. A computer program comprising software code instructions for performing the method according to any one of claims 1, 2 and 5-13, when the computer program is executed by one or more processors.

100

110    125        130                    145

+ ⊕ — →  Transform → Quantization →          Entropy
                                              Coding      →

                                    140   Inverse
                                          Quantization

                                    150   Inverse
                                          Transform

                                    155   ⊕

105   160   Intra prediction

170   Motion
      Compensation

165   In-loop
      Filters

175   Motion
      Estimation

180   Reference
      Picture Buffer

**FIG. 1**

200

230              240              250
Entropy    →   Inverse    →    Inverse
Decoding       Quantization    Transform

                               255  ⊕

270

260   Intra Prediction

275   Motion
      Compensation

265   In-loop Filters  →

280   Reference
      Picture Buffer

**FIG. 2**

FIG. 3

**FIG. 4A**

**FIG. 4B**

500

510 — Initialization

520 — Access an intra prediction mode

530 — current intra pred mode is directional?

no

yes

540 — Test uni-directional intra pred

545 — Test the intra prediction mode

550 — Test bi-directional intra pred

560 — Determine whether to use uni- or bi-directional intra prediction, set bi-directional flag

585 — more intra pred modes to be tested for current block?

Yes

No

590 — Choose the intra prediction mode

595 — Encode the intra prediction mode, prediction residual (and the bi-directional flag)

**FIG. 5**

**FIG. 6**

700

705 — Access an intra prediction mode

710 — current mode planar or DC? — no

yes

720 — Choose R1, R2, $R_{1,T}$ and $R_{2,T}$

730 — Determine whether to use bi-directional intra prediction

740 — Test the intra prediction mode

750 — more intra pred modes to be tested for current block? — Yes

No

760 — Choose the best intra prediction mode

770 — Encode the intra prediction mode, prediction residual

**FIG. 7**

800A

810 — decode an intra prediction mode, prediction residuals

820 — current mode planar or DC? — yes

no

830 — Choose $R_1$, $R_2$, $R_{1,T}$ and $R_{2,T}$

870 — Decode the block

835 — Determine whether to use bi-directional prediction

840 — use bi-directional?

yes    no

850 — Predict pixels ($P_1$ and $P_2$)

860 — Predict pixels ($P_1$)

870 — Decode the block

**FIG. 8A**

800B

810 — decode an intra prediction mode, prediction residuals

880 — Decode B

885 — derive predictor (P) for bi-directional flag

890 — Decode bi-directional flag (F=B XOR P)

840 — use bi-directional?

yes    no

850 — Predict pixels ($P_1$ and $P_2$)

860 — Predict pixels ($P_1$)

870 — Decode the block

**FIG. 8B**

900

Processor — 910

Memory — 920

Encoder/ Decoder — 930

Storage Device — 940

Communication Interface — 950

960

Communication Channel

**FIG. 9**

Europäisches
Patentamt

European
Patent Office

Office européen
des brevets

# EUROPEAN SEARCH REPORT

Application Number

EP 17 30 5628

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2014/009574 A1 (HANNUKSELA MISKA MATIAS [FI] ET AL) 9 January 2014 (2014-01-09)<br>* abstract; figures 8, 9a-i, 20-22 *<br>* paragraph [0134] - paragraph [0139] *<br>* paragraph [0113] - paragraph [0115] *<br>* paragraph [0162] - paragraph [0166] *<br>* paragraph [0186] - paragraph [0204] *<br>* paragraphs [0001], [0217], [0221], [0282] * | 1-4,6, 12-15<br>5,7-11 | INV.<br>H04N19/70<br>H04N19/593<br>H04N19/11<br>H04N19/14<br>H04N19/176 |
| A | EP 2 658 263 A2 (LG ELECTRONICS INC [KR]) 30 October 2013 (2013-10-30)<br>* abstract *<br>* paragraph [0078] * | 13 | |
| A | TAKAHASHI M ET AL: "TSIP: Improved intra prediction method",<br>33. VCEG MEETING; 82. MPEG MEETING; 20-10-2007 - 20-10-2007; SHENZHEN;(VIDEO CODING EXPERTS GROUP OF ITU-T SG.16),,<br>no. VCEG-AG07,<br>20 October 2007 (2007-10-20), XP030003611,<br>ISSN: 0000-0095<br>* figures 2, 3 *<br>* page 1 - page 2 * | 1-15 | |
| A | TAICHIRO SHIODERA ET AL: "Block Based Extra/Inter-Polating Prediction for Intra Coding",<br>IEEE INTERNATIONAL CONFERENCE ON IMAGE PROCESSING, ICIP 2007, IEEE, PI,<br>1 September 2007 (2007-09-01), pages VI-445, XP031158358,<br>ISBN: 978-1-4244-1436-9<br>* abstract; figures 3, 4 *<br>* Section 3 * | 1-15 | |

TECHNICAL FIELDS
SEARCHED    (IPC)

H04N

-/--

The present search report has been drawn up for all claims

| Place of search | Date of completion of the search | Examiner |
|---|---|---|
| The Hague | 27 July 2017 | Streich, Sebastian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JANI LAINEMA ET AL: "Intra Coding of the HEVC Standard", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 December 2012 (2012-12-01), pages 1792-1801, XP011487148, ISSN: 1051-8215, DOI: 10.1109/TCSVT.2012.2221525 * the whole document * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 27 July 2017 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 5628

This annex lists the patent family members relating to the patent documents cited in  the above-mentioned European search report.
The members are as contained in the European Patent Office EDP file on
The European Patent Office is in no way liable for these particulars which are merely given for the purpose of information.

27-07-2017

| Patent document cited in search report | | | Publication date | Patent family member(s) | | | Publication date |
|---|---|---|---|---|---|---|---|
| US 2014009574 | A1 | | 09-01-2014 | US | 2014009574 | A1 | 09-01-2014 |
| | | | | WO | 2013107931 | A1 | 25-07-2013 |
| EP 2658263 | A2 | | 30-10-2013 | CN | 103283237 | A | 04-09-2013 |
| | | | | EP | 2658263 | A2 | 30-10-2013 |
| | | | | KR | 20130133250 | A | 06-12-2013 |
| | | | | KR | 20150140848 | A | 16-12-2015 |
| | | | | US | 2013272405 | A1 | 17-10-2013 |
| | | | | WO | 2012087034 | A2 | 28-06-2012 |

EPO FORM P0459

For more details about this annex : see Official Journal of the European Patent Office, No. 12/82